# EUROPEAN PATENT APPLICATION

(11) **EP 4 574 632 A1**
(43) Date of publication of application: **25.06.2025**
(21) Application number: 23218405.1
(22) Date of filing: 20.12.2023
(51) Int. Cl.: B62D 35/00

(54) **REAR SPOILER DEVICE FOR A COMMERCIAL VEHICLE**

(71) Applicant: ZF CV Systems Global GmbH, 3006 Bern (CH)
(72) Inventor: HOLUBECKI, Daniel, 55-080 Katy Wroclawwskie (PL); KOWALSKI, Przemyslaw, 51-180 Wroclaw (PL)
(74) Representative: Ohlendorf, Henrike

(57) **Abstract**

The invention relates to a rear spoiler device (5) for a commercial vehicle (1), the rear spoiler device (5) comprising a top panel (6) adjustable between a folded basic position and a deployed unfolded position, thereby extending a vehicle roof (7) of the vehicle (1) in a rearward direction, and a side panel (8) adjustable between its folded basic position and its deployed unfolded position, thereby extending a side wall (9) of the vehicle (1) in the rearward direction. The rear spoiler device (5) furthermore comprises an adjusting device (10) for adjusting the top panel (6) and the side panel (8) between their unfolded positions and their folded positions, respectively. The adjusting device (10) comprises a single actuator (12) and a combining mechanism (14) driven by the single actuator (12). The side panel (8) and the top panel (6) together are adjustable by the combining mechanism (14), wherein the top panel (6) and the side panel (8) are displaceable between their positions in a predetermined sequential order relative to each other.

## Description

The invention relates to a rear spoiler device for a commercial vehicle, in particular a towing vehicle or a trailer, and a commercial vehicle equipped with the rear spoiler device.

Commercial vehicles generally comprise a box-shaped body in order to enable effective use of the available cargo space and direct access to the cargo space via rear doors provided at a rear of the vehicle. However, the box shape leads to strong vortices behind the rear of the vehicle while driving, thereby deteriorating its aerodynamic characteristics. Rear spoiler devices can be attached to the rear in order to improve the aerodynamics of the vehicle and reduce fuel consumption.

In general, commercial vehicles have at least one rear door, in particular two rear doors, that swing open rearwards and outwards; further, the rear doors can subsequently be pivoted forwards, in particular by more than 180° from the closed position, for example about 250° or 270°, in order to place them against the side walls of a box-shaped body of the vehicle and, if necessary, to lock them in place.

US 8,382,194 B2 discloses a rear spoiler for a commercial vehicle, wherein the rear spoiler is attached to the sidewalls and to the top edge of the rear of the commercial vehicle. US 2011/0148140 A1 describes a velocity-dependent adjustment of rear air deflectors by means of an actuator arm.

US 2015/0197292 A1 describes a further design of a rear spoiler device. However, these designs are complex and not easy to attach to the vehicle body.

In the basic folded position, both panels rest on each other and on the rear doors; therefore, the deployment and folding of the two panels is controlled in order to follow a specific sequence and to avoid a collision. In general, the top panel and the side panel are driven by their own actuators, which therefore need a common control unit.

It is an object of the invention to provide a rear spoiler device that provides beneficial aerodynamical characteristics and a reliable adjustment between its deployed and its folded position, with relatively little effort. A further object of the invention is to provide a commercial vehicle equipped with such a rear spoiler device, which allows for a good accessibility of the rear doors and reliable adjustment.

### Summary of the invention

The rear spoiler device according to the invention is defined in claim 1. Further, a commercial vehicle equipped with such a rear spoiler device is provided. The dependent claims describe preferred embodiments.

Thus, a single common actuator is provided for adjusting both the top panel and the side panel. The actuator drives a combining mechanism which then actuates the two panels in a predetermined sequential order. In its folded basic position, the top panel is swivelled downwards and preferably rests on the rear door. The side panel is swivelled inwards and preferably rests on the top panel. When actuating both panels from the folded basic position, first the side panel has to be displaced in order to release the top panel, which is displaced afterwards. Both adjusting movements may overlap in time; however, an initial displacement of the side panel is necessary to release the top panel. This coordination of the displacement paths is ensured by the combining mechanism, which is driven by the single actuator.

The invention offers several advantages. The inventive rear spoiler system is relatively cheap and has a low weight, since it uses a single actuator for both panels. Thus, the energy consumption is relatively low. The coordination of the folding and unfolding movements and pathways by the combining mechanism is safe and reliable.

Furthermore, the inventive rear spoiler system is fast to deploy and fast to fold, thereby minimizing operator delays. The adjusting device can be designed with a compact, space-saving shape, for mounting it on the rear door, for example on the inner face of the rear door.

Furthermore, an autonomous or automatic pneumatic actuation is possible. In particular, an automatic deployment and folding can be provided in dependence of the driving state, wherein an automatic deployment is only provided above a velocity threshold.

The actuator may in particular be realised as a linear actuator, in particular a pneumatic or electromechanical actuator. By using a pneumatic or electromechanical actuator, damages of the panels and the adjusting device due to obstacles can be avoided; obstacles blocking one of the panels do not damage the pneumatic actuator. Further, a pneumatic actuation results in a soft displacement of the panels. The electropneumatic control of the pneumatic actuator is relatively simple, in particular with an electropneumatic valve system, for example with a 3/2-way valve.

According to an embodiment, an electric override and/or a manual override for the electropneumatic valve system is provided, for adjusting the device independent of the pneumatic control.

The adjustment device can be supported by a single base plate to be mounted on the rear door, thereby facilitating the assembly and enhancing the reliability.

According to another embodiment, three sliders are provided, an actuation slider driven by the actuator and two sliders for the two panels, which allow for a control of each panel by its own sliding means. In particular, the side panel may be actuated by a horizontal slider received on a horizontal guiding rail and the top panel is actuated by a vertical slider received on a vertical guiding rail. The actuation control slider is preferably received on the vertical guiding rail, allowing for a compact design and a reliable actuation.

Thus, the conceptual control mechanism of a "single actuator" is preferably based on a system of three control sliders or carriages, sliding on guiding rails, where thanks to the appropriate arrangement of the carriages and their connection by a system of e.g. levers of appropriate lengths and ratios, it is possible to obtain such a sequence of movement, where the stroke of one linear actuator will control the opening/closing of the aerodynamic panels in a certain sequence.

According to another embodiment, a dead travel or idle stroke is provided between the control sliding means and one of the further sliding means, in particular the vertical sliding means. In a first actuation phase, the pneumatically actuated actuation slider only deploys the side panel from its folded to its unfolded position; the dead travel or idle stroke prevents an actuation of the top panel. After it has ended its dead travel, the actuation slider starts actuating, e.g. pushing, the vertical sliding means and thereby initializes the subsequent displacement of the folded top panel into its unfolded position. Thus, the dead travel corresponds to a retardation in time of the deployment motions.

According to another embodiment, a rack mechanism is provided for a suitable transmission and sequential order of the displacements. The pneumatic actuator steers the rack mechanism, e.g., with a toothed rack, which drives a toothed wheel running on a suitable rack means. The toothed racks can be designed with specific forms, in particular as linear racks or curved racks, in particular with an L-shape, in order to realize a retarded actuation and/or dead travel.

According to a further embodiment, the combining mechanism comprises a guiding box displaced by the linear actuator, wherein the guiding box defines the pathways of rods or levers of the side panel and top panel, respectively. The pathways can be defined by cut-outs or grooves in a plate, thereby realising a cheap, reliable solution.

By realising the combining mechanism by a system of levers, racks and/or guiding boxes or guiding means, a cheap, reliable, compact solution is realised, with sufficient degrees of freedom for design.

The side panels fold towards the trailer's centre line, thereby leaving plenty of room to open the rear doors to a generous angle of more than 180°, in particular 250° to 270°, thereby enabling the opened rear doors to be fixed onto the side walls of the vehicle structure. Thus, easy docking with narrow ramps and traffic aisles is possible.

Both panels can be attached to the rear doors, without further connection to the vehicle structure. The panels are preferably swiveled around hinges or by hinges, in particular with a displacement of the leading edge of the panels. Such a displacement of the panels from the folded basic positions on the rear doors into actuated positions at the roof or sides allows for an actuated position with smooth aerodynamic alignment between the structure, in particular the trailer sides and roof, and the panels, with no offset at the top and the sides, thereby avoiding air turbulences in the transition area between the structure and the panels. The rear spoiler device is simple to install, with a modular design and possible retrofitting. Only a few fixing points are required for mounting. The rear spoiler device fits all rear swing door vehicles, in particular rear swing door trailers.

### Brief description of the drawings

The invention is explained in more detail by means of preferred embodiments, wherein
- Fig. 1a: is a perspective back view of a commercial vehicle trailer equipped with a rear spoiler device according to an embodiment of the invention, in its folded basic position;
- Fig. 1b: is the perspective back view of Fig. 1a with the rear spoiler device in an unfolded deployed position;
- Fig. 2: is a further back view of the rear spoiler device in its unfolded deployed position;
- Fig. 3: shows a block diagram of a spoiler device with linear pneumatic actuation;
- Fig. 4: shows a combining mechanism according to an embodiment, in its folded basic position;
- Fig. 5: shows the embodiment of Fig. 4 in its unfolded deployed position;
- Fig. 6: is an enlarged view of Fig. 5
- Fig. 7: depicts a further embodiment of a combining mechanism with a carriage received in a half-profile rail;
- Fig. 8: shows an embodiment of a combining mechanism;
- Fig. 9a: shows an embodiment combining mechanism with a rack mechanism;
- Fig. 9b: shows an enlarged view of the right part of Fig. 9a,
- Fig. 9c: shows a detail of Fig. 9b,
- Fig. 10a: shows an embodiment of a combining mechanism with a guiding box for defining pathways,
- Fig. 10b: shows an enlarged view of the combining mechanism of Fig. 10a.

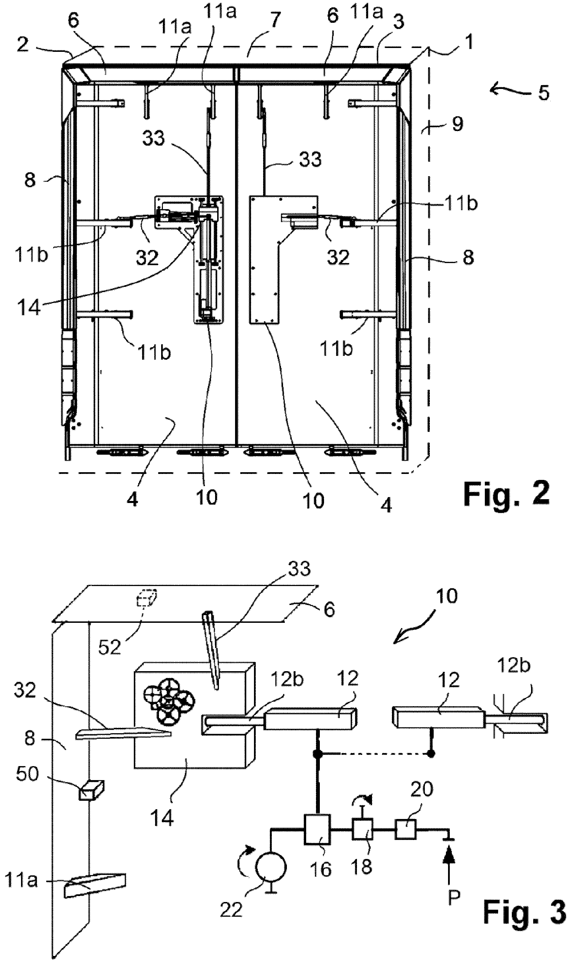

According to Fig. 2, a commercial vehicle 1 comprises a substantially box-shaped vehicle structure 2, as indicated by dashed lines. A rear part 3 of the vehicle structure 2 is equipped with two rear doors (tailgates) 4. A rear spoiler device 5 is mounted on each rear door 4, respectively, as is explained hereinafter in more detail.

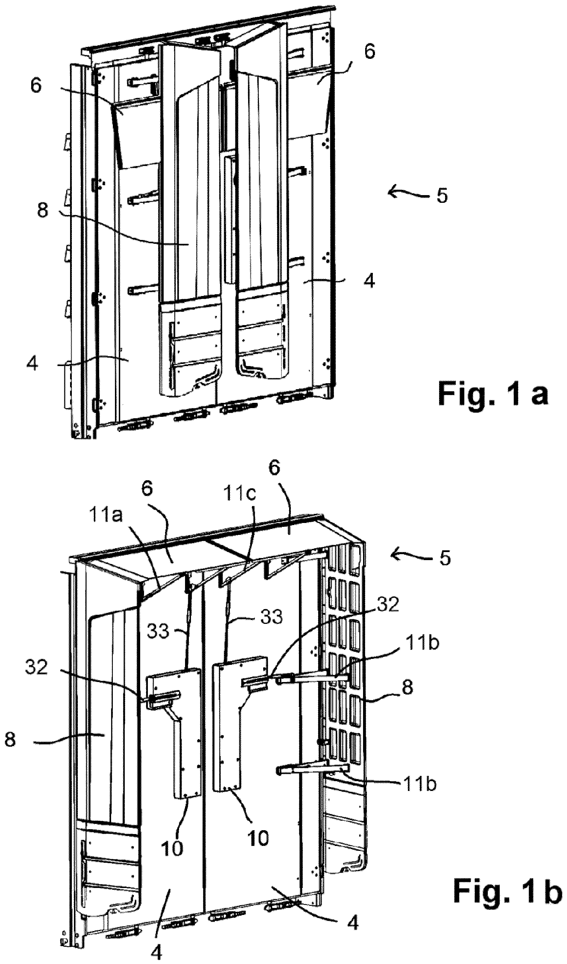

Fig. 1a shows the folded basic position of the two rear spoiler devices 5, the folded position being the basic state during standstill and when driving at lower speeds. In Fig. 1b and Fig. 2, the rear spoiler device 5 is in its unfolded, deployed state, which is autonomously adjusted at higher driving velocities. The rear spoiler devices 5 comprise identical or mirror-inverted parts for the left and right rear door 4, as can be seen from the figures. Each rear spoiler device 5 comprises a top panel 6, which in its unfolded position of Fig. 1a and Fig. 2 extends the vehicle roof 7 in rearwards direction, in particular with an inclination downwards, for aerodynamical performance. Accordingly, each rear spoiler device 5 comprises a side panel 8, which in its deployed, unfolded state of Fig. 2 extends the side wall 9 of the structure 2 rearwards, in particular with an inwards inclination, for improving an aerodynamic performance of the commercial vehicle 1.

In its folded basic position of Fig. 1a, the top panel 6 is swivelled downwards and rests on the rear door 4. In general, no spring bias is necessary for this position and adjustment into this position, since gravity is sufficient. The side panel 8 is swivelled inwards and rests on the top panel 8. In this folded basic position, the rear door 4 can be opened and pivoted or swivelled by an angle of more than 180°, for example 260°, in order to fix the rear door 4 at the side wall 9 of the structure 2. When actuating the panels 6, 8, first the side panel 8 has to be displaced in order to release the top panel 8, which is displaced afterwards. Both adjusting movements may overlap in time; however, an initial displacement of the side panel 8 is necessary to release the top panel 6 and to avoid a collision during displacement.

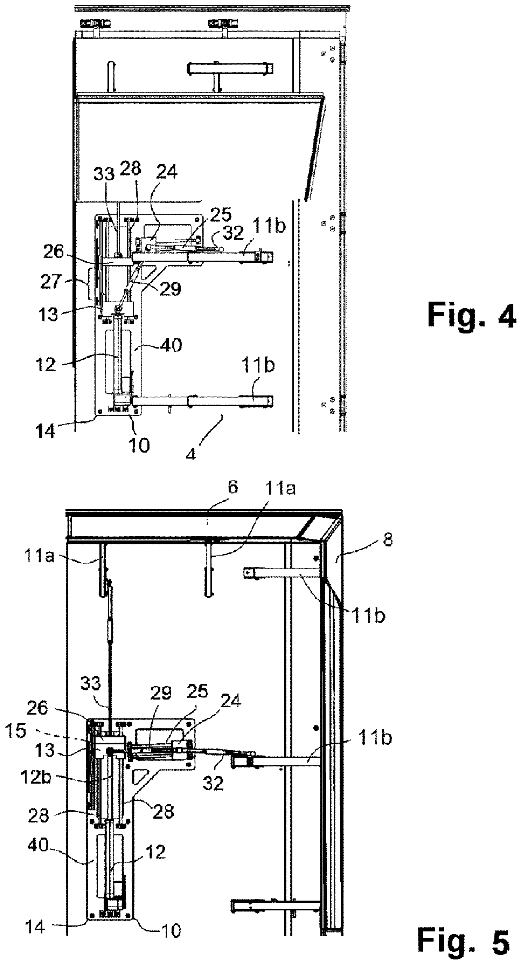

The displacement paths are coordinated by an adjusting device 10, which in particular comprises a combining mechanism 14, a single linear pneumatic actuator 12 with a piston 12b and an electropneumatic control system 16, 18, 20, 22. The linear pneumatic actuator 12 drives the combining mechanism 14 and hereby shifts both, the side panel 8 and the top panel 6, in a predetermined sequential order. In Figs. 4 to 9, various embodiments of combining mechanisms 14 are explained in detail. The combining mechanism 14 and the linear pneumatic actuator 12 are advantageously attached to the rear doors 4; the electropneumatic control system 16, 18, 20, 22 can be provided at the structure 2 or in a lift axle area of the commercial vehicle 1. The two rear spoiler devices 5 can be controlled and supplied by a single common electropneumatic control system 16, 18, 20, 22, for a simultaneous activation and reduction of hardware and costs; however, separate electropneumatic control systems 16, 18, 20, 22 are possible, for better handling by an operator.

The general design of the rear spoiler device 5 is depicted in Fig. 3. The actuator 12, in these embodiments a linear pneumatic actuator 12, is pneumatically controlled and drives both panels 6, 8 via the combining mechanism 14. The pneumatic actuator 12 receives pressurized air from a lift axle control valve 16, a 3/2-way cock valve 18, and a charging valve 20. The charging valve 20 is fed with pressurized air, preferably dependent on the vehicle speed. An override switch 22 allows for an electric override of this pneumatic signal, in particular by outputting a high voltage of 24 V for unfolding and either 0 V or open circuit for folding.

The combining mechanism 14 allows for an automatically controlled, combined adjustment of both panels 6, 8, without using sensors. Starting from the folded basic position of Fig. 1, the combining mechanism 14 starts the deployment of the side panel 8; the deployment of the top panel 6 is retarded in time. This retardation is preferably realized by a dead travel or idle stroke of a connection between the combining mechanism 14 and the top panel 6. The reverse actuation from the unfolded state of Fig. 2 back into the folded basic position of Fig. 1 is thus defined by a corresponding retardation. The combining mechanism 14 can be realized by a suitable lever mechanism with sliders or carriages, a rack mechanism and/or a control mechanism with cut-outs or grooves, as can be seen from the following embodiments.

Figs. 4 and 5 depict an embodiment of a combining mechanism 14 with separate sliding paths and a dead travel. The piston 12b of the pneumatic actuator 12 is guided in a vertical guiding rail 28, together with a vertical slider 26. Thus, the head of the piston 12b serves as a vertical actuation slider 13, which uses the same vertical guiding rail 28 as the vertical slider 26, which in turn actuates the top panel 6 via a vertical rod 33. Adjustment of the side panel 8 is accomplished by a horizontal slider 24 guided in a horizontal guiding rail 25. The horizontal slider 24 is connected to the vertical actuation slicer 13 via a middle connecting lever 29 and actuates the side panel 8 via a horizontal rod 32. The guiding rails 25, 28 are provided in a base plate 40 to be mounted on the rear door 4. The specific construction of the combining mechanism 14 secures the actuation sequence of the panels 6, 8.

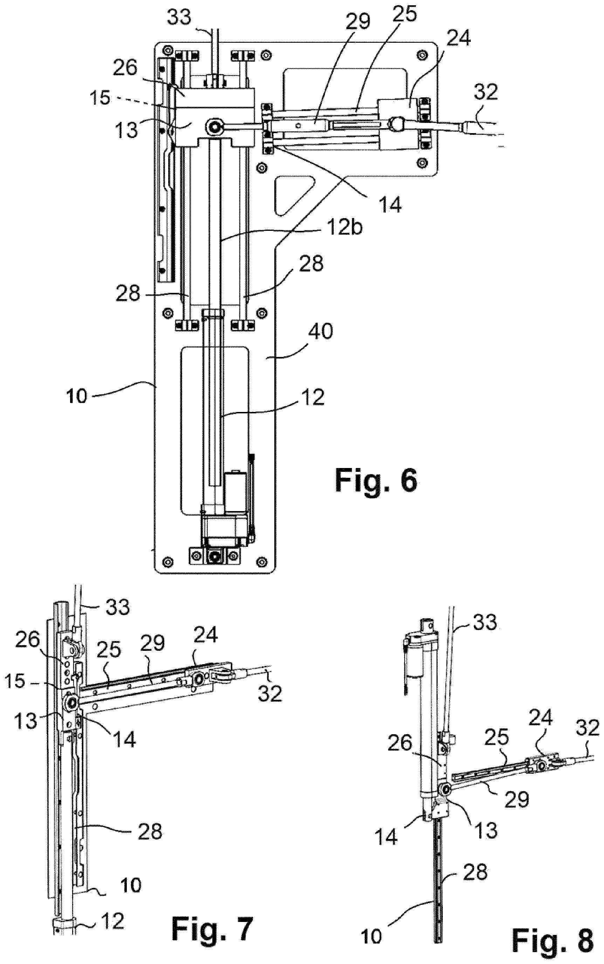

In the folded basic position of Fig. 4, the side panel 8 covers the top panel 6. Thus, when shifting into the actuated deployed position of Figs. 1b, 2, 5, and 6, first, the side panel 8 must be swivelled, thereby uncovering the top panel 6, which is afterwards swivelled upwards. In Fig. 4, the vertical slider 26 is separated from the vertical actuation slider 13 by a dead travel 27, i.e. a distance without contact. The horizontal slider 24, however, is connected to the vertical actuation slider 13 via the articulated middle connecting lever 29, which transfers the vertical upward motion of the vertical actuation slider 13 into a horizontal outwards motion of the horizontal slider 24. Thus, during the dead travel of the vertical actuation slicer 13, the side panel 8 is swivelled outwards and the top panel 8 remains in its flat basic position. When the vertical actuation slider 13 abuts on the vertical slider 26, the pivoting motion of the top panel 8 starts. Preferably, a safety locking mechanism 15 (indicated) is provided between the vertical actuation slider 13 and the vertical slider 26, in order to fix these two sliding parts, thereby also fixing the deployed top panel 6. The safety locking mechanism 15 can be realized by a hook or clamp mounted on the vertical actuation slider 13 and engaging the vertical slider 26 in the contact position of Figs. 5, 6. Engaging and releasing of the safety locking mechanism 15 can be accomplished automatically.

In this contact position, the force transmission from the vertical actuation slider 13 to the horizontal slider 24 is advantageous, since the angle between the vertical actuation slider 13 and the horizontal slider 24 changes, which enables a higher vertical pushing force onto the vertical slider 26. The pneumatic piston 12 of this embodiment is preferably two-way actuated, allowing for an active pressurizing of the piston 12b and the vertical actuation slider in both directions, upwards and downwards.

Figs. 7 and 8 show further embodiments of the sliding mechanism of Figs. 4 and 5, with specific guiding rails 25, 28 and sliders 13, 24, and 26. According to Fig. 7, the vertical actuation slider 13 and the vertical slider 26 are realized as trolleys, which roll in a half-profile serving as the vertical guiding rail 28. The horizontal guiding rail 25 and horizontal slicer 24 can correspondingly be realized as a trolley-profile system. In Fig. 8, the sliders 13, 24, 26 form a kind of carriage engaging tracks or rails serving as guiding rails 25, 28.

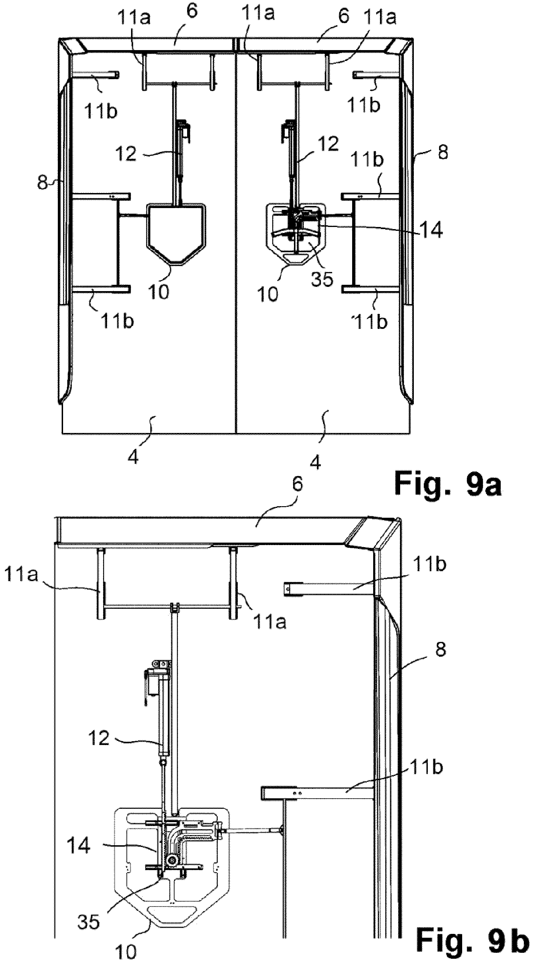

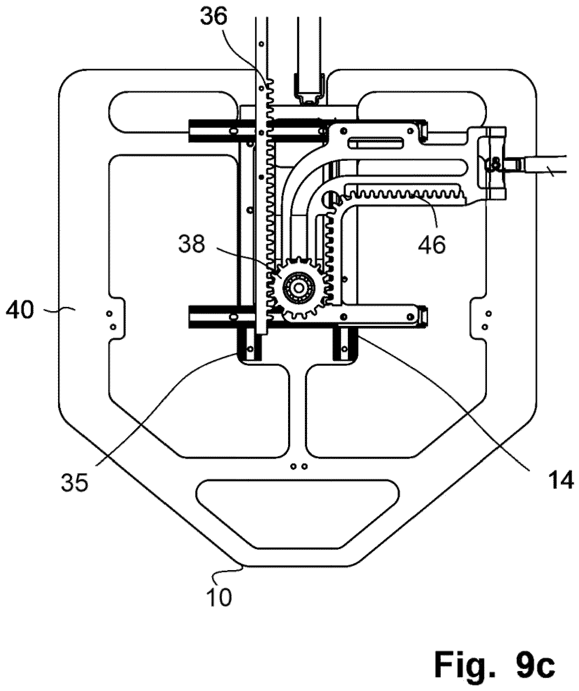

In the embodiment of Fig. 9a, 9b, 9c, the combining mechanism 14 is realized by a rack mechanism 35. A base plate 40 is mounted on the rear door 4 or on a structure to be fitted to the rear door 4. The linear pneumatic actuator 12 is mounted on the rear door 4 or on the structure to be fitted on the rear door 4 and extends its actuation. The piston 12b of the linear pneumatic actuator 12 is connected to a linear toothed rack 36. A toothed wheel 38 is engaged with the linear rack 36, engages an L-shaped rack 46 and shifts the L-shaped rack 46 on the base plate 40 first in a vertical direction and then in a horizontal direction. The L-shaped rack 46 is fixed to a sliding plate that is connected to the side panel 8 via one of the horizontal struts 11b and to the top panel 6 via one of the vertical struts 11a.

Thus, the specific shape and position of the L-shaped rack 46 and the trajectory cut into the movable plate define the movements, with a movement dead-travel for the vertical movement.

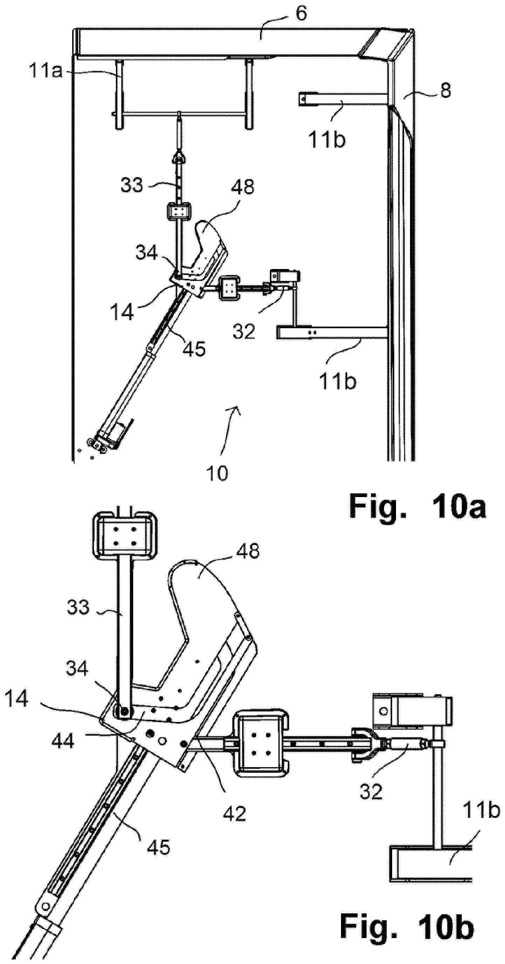

Fig. 10a, 10b show an embodiment with a guiding box 48 for defining the motion directions and the transmission ratios of the horizontal adjustment of the side panel 8 and the vertical adjustment of the top panel 6. The guiding box 48 slides or rolls on a guiding rail 45 and comprises a first cut-out 42 for an engaging pin of the horizontal rod 32 of the horizontal strut 11b of the side panel 8 and a second cut-out 44 for an engaging pin 34 of the vertical rod 33 of the vertical strut 11a of the top panel 6. Therefore, the position of the guiding box 48 and the form of the cut-outs 42, 44 define the dead travel of the vertical motion and the actuation of both panels 6, 8.

In these embodiments, the moveable parts of the combing mechanisms 14, in particular the guiding plates, guiding boxes, carriages, and trolleys, can be realized by different types and constructions. Guidings with sliders or with wheels and balls can be used. The specific angles, positions and transmission ratios between the parts can be adjusted in order to ensure a correct deployment and folding movements of the panels 6, 8. The adjusting device may be mounted onto the rear door 4 with a base plate 40, which enables a reliable and safe assembly.

The pivotal movements of the panels 6, 8 may be limited by mechanical end stops 50, 52. The panels 6, 8 may be fitted to the rear doors 4 by hinges, as per se known from the prior art.

### List of reference numerals (Part of the description)

- 1: commercial vehicle
- 2: vehicle structure
- 3: rear part
- 4: rear doors (tail gates)
- 5: rear spoiler device
- 6: top panel

- 7: vehicle roof
- 8: side panel
- 9: side wall
- 10: adjusting device
- 11a: vertical strut, for the top panel 6
- 11b: horizontal strut, for the side panel 8
- 12: linear pneumatic actuator
- 12b: piston
- 13: vertical actuation slider
- 14: combining mechanism
- 15: safety locking mechanism
- 16: lift axle control valve
- 18: 3/2-way cock valve
- 20: charging valve
- 22: override switch
- 16, 18, 20, 22: electropneumatic valve system

- 24: horizontal slider
- 25: horizontal guiding rail
- 26: vertical slider
- 27: dead travel
- 28: vertical guiding rail
- 29: middle connecting lever
- 32: horizontal rod
- 33: vertical rod
- 34: engaging pin of the vertical rod 33

- 35: rack mechanism
- 36: toothed rack
- 38: toothed wheel
- 40: base plate
- 42: cut-out for horizontal rod
- 44: cut-out for vertical rod
- 45: guiding rail
- 46: L-shaped rack
- 48: guiding box
- 50, 52: mechanical end stops

## Claims

1. A rear spoiler device (5) for a commercial vehicle (1), the rear spoiler device (5) comprising:
- a top panel (6) adjustable between a folded basic position and a deployed unfolded position, thereby in its unfolded position extending a vehicle roof (7) of the vehicle (1) in a rearward direction,
- a side panel (8) adjustable between its folded basic position and its deployed unfolded position, thereby in its unfolded position extending a side wall (9) of the vehicle (1) in the rearward direction,
- an adjusting device (10) for adjusting the top panel (6) and the side panel (8) between their unfolded positions and their folded positions, respectively, the adjusting device (10) comprising:
- a single actuator (12) and
- a combining mechanism (14) driven by the single actuator (12), the side panel (8) and the top panel (6) being together adjustable by the combining mechanism (14),
wherein the top panel (6) and the side panel (8) are displaceable between their positions in a predetermined sequential order relative to each other.

2. The rear spoiler device (5) according to claim 1, wherein in the folded basic position
- the top panel (6) and the side panel (8) extend in parallel and/or
- the side panel (8) is positioned above the top panel (6) and/or
- the side panel (8) rests on the top panel (6).

3. The rear spoiler device (5) according to one of the preceding claims, the rear spoiler device (5) being mountable on a rear door (4) of a vehicle (1), wherein in the folded basic positions of the panels (6, 8) the rear spoiler device (5) enables an opening and swinging of the rear door (4) of the vehicle (1).

4. The rear spoiler device (5) according to one of the preceding claims, further comprising
- at least one mechanical end stop (50, 52) for stopping the top panel (6) and/or the side panel (8) in the unfolded position and/or
- a spring means for biasing the top panel (6) and/or the side panel (8) into one of its positions or both positions and/or
- a base plate (40) for mounting on the rear door (4), the base plate (40) supporting the adjustment device (10).

5. The rear spoiler device (5) according to one of the preceding claims, wherein the actuator (12) is realized as a linear actuator (12), in particular with a linearly shiftable piston (12a).

6. The rear spoiler device (5) according to one of the preceding claims, wherein the actuator (12) is designed as a pneumatic actuator (12) or an electromechanical actuator.

7. The rear spoiler device (5) according to claim 6, wherein the pneumatic actuator (12) is pneumatically controlled by an electropneumatic valve system (16, 18, 20, 22),
the electropneumatic valve system (16, 18, 20, 22) being adapted for venting and exhausting the pneumatic actuator (12), the electropneumatic valve system (16, 18, 20, 22) providing an electric override by a control signal, in particular by a supply voltage, and/or a manual override by an operator.

8. The rear spoiler device (5) according to one of the preceding claims, wherein the combining mechanism (14) comprises
- a vertical guiding rail (28),
- a vertical slider (26) received on the vertical guiding rail (28) and connected to the top panel (6), for adjusting the top panel (6),
- a horizontal guiding rail (25),
- a horizontal slider (24) received on the horizontal guiding rail (25) and connected to the side panel (8), for adjusting the side panel (8).

9. The rear spoiler device (5) according to claim 8, wherein the vertical slider (26) and/or the horizontal slider (25) are realized by
- a slider gliding on the guiding rail or
- a wheel carriage comprising wheels rolling on the guiding rail.

10. The rear spoiler device (5) according to claim 8 or 9, wherein a piston (12b) of the actuator (12) comprises a second vertical slider (13) guided on the vertical guiding rail (28), together with the vertical slider (26).

11. The rear spoiler device (5) according to one of claims 8 to 10, wherein the actuator (12) contacts or actuates the vertical slider (26) after a dead travel and the actuator (12) actuates the horizontal slider (24) without dead travel.

12. The rear spoiler device (5) according to claim 11, wherein the actuator (12) is pivotably connected to the horizontal slider (24) by a middle connecting lever (46).

13. The rear spoiler device (5) according to one of claims 1 to 7, wherein
the combining mechanism (14) comprises a diagonally extending guiding rail (45) and a guiding box (48) slidably received on the diagonally extending guiding rail (45),
the guiding box (48) shifting the top panel by a top connecting means and the side panel by a side connecting means, respectively,
the guiding box (48) comprising a top pathway for the top connecting means and a side pathway for the side connecting means.

14. The rear spoiler device (5) according to claim 13, wherein the guiding box (48) is realized by a plate with cut-outs (42, 44), the cut-outs defining the top pathway and the side pathway.

15. The rear spoiler device (5) according to one of the claims 1 to 7, wherein the combining mechanism (14) comprises a rack mechanism with
- a first toothed rack (36) connected to the vertical slider (26),
- a second toothed rack (46) connected to the horizontal slider (24) and
- a toothed wheel (38) engaged with both toothed racks (36, 46), for combining the displacement movements of the racks (36, 46).

16. The rear spoiler device (5) according to claim 15, wherein at least one of the racks (46) comprises a curved form, in particular an L-shaped form, for defining a retarded displacement.

17. A commercial vehicle (1), comprising
- a box-shaped vehicle structure (2),
- a rear part (3) with a left rear door (4) and a right rear door (4),
- a vehicle roof (7) and side walls (9),
- a left rear spoiler device (5) according to one of the preceding claims provided on the left rear door (4) and
- a right rear spoiler device (5) according to one of the preceding claims provided on the right rear door (4),
the rear doors (4) being swingable from their closed position into an open position by an opening angle of more than 180°, e.g. 250° to 270°, with the rear spoiler devices (5) remaining in their folded positions,
in their open positions, the rear doors (4) being lockable at the side walls (9), with the folded rear spoiler devices (5) received between the locked rear doors (4) and the side walls (9), respectively,
in their actuated, unfolded positions, the panels (6, 8) extending the vehicle roof (7) and the side walls (9), respectively.

18. The commercial vehicle (1) according to claim 17, wherein the left rear spoiler device (5) and the right rear spoiler device (5) comprise a common control system (16, 18, 20, 22), in particular a common electropneumatic valve system or a common electromechanical control system.
